# EUROPÄISCHE PATENTSCHRIFT

(11) **EP 1 907 209 B1**
(45) Veröffentlichungstag und Bekanntmachung des Hinweises auf die Patenterteilung: **21.03.2012**
(21) Anmeldenummer: 06754032.8
(22) Anmeldetag: 01.06.2006
(51) Int. Cl.: B32B 37/10, B30B 5/02

(54) **Maschine zur Herstellung von plattenförmigen Elementen aus Verbundmaterial**
Machine for the production of sheet elements from composite material
Machine pour produire des elements en forme de plaques en materiau composite

(30) Priorität: 03.06.2005 CH 950052005
(43) Veröffentlichungstag der Anmeldung: 09.04.2008
(60) Teilanmeldung: 10184124.5
(73) Patentinhaber: 3S Swiss Solar Systems AG, 3250 Lyss (CH)
(72) Erfinder: ZAHND, Jürg, CH-3427 Utzenstorf (CH); BOOS, Christoph, CH-3012 Bern (CH)
(74) Vertreter: Secklehner, Günter
(86) Internationale Anmeldenummer: PCT/EP2006/005221
(87) Internationale Veröffentlichungsnummer: WO 2006/128699

(56) Entgegenhaltungen:
- EP-A2- 0 066 556
- DE-A1- 3 017 273
- US-B1- 6 367 530

## Beschreibung

Die Erfindung betrifft eine Maschine zur Herstellung von plattenförmigen Elementen aus Verbundmaterial, mit einer Heizplatte, Fördermitteln zum Transportieren der Elemente längs eines über die Heizplatte führenden Förderwegs, einem senkrecht zur Heizplatte bewegbaren Oberteil, einer am Oberteil angeordneten Membrane und einer zwischen der Membrane und der Heizplatte angeordneten, synchron mit den Fördermitteln bewegbaren Trennfolie.

Bei der Produktion von plattenförmigen Elementen aus Verbundmaterial, beispielsweise photovoltaischen Elementen, werden mehrere Schichten, darunter Glas, unter Druck und Wärme zusammengefügt. Die für diesen Vorgang verwendeten Maschinen haben im Allgemeinen eine beheizbare Laminierstation, eine Kühlstation und Transportmittel zum intermittierenden Fördern der Elemente. Die Laminierstation weist dabei eine Heizplatte auf und an einem auf die Heizplatte absenkbaren Oberteil ist eine Membrane vorhanden, die im abgesenkten Zustand mit der Heizplatte eine geschlossene Kammer bildet. Durch Evakuieren dieser Kammer werden die Elemente entgast, die Membrane wird durch den auf der von der Kammer abgewandten Seite der Membrane wirkenden Druck an die Heizplatte und die Elemente angedrückt und presst die Elemente zusammen.

Bekannte Maschinen weisen als Transportmittel für die Elemente ein Transportband auf, welches gleichzeitig die Heizplatte vor Verschmutzung, beispielsweise durch aus den Elementen austretenden Klebstoff, schützt. Um auch die Vakuummembrane zu schützen, ist es zum Beispiel aus US 6767530 bekannt, die Elemente auf ihrer oberen Fläche mit einer Trennfolie abzudecken. Sowohl das Transportband als auch die Trennfolie können als endlose Bahnen ausgebildet sein. Dabei ist nachteilig, dass Regeleinrichtungen vorgesehen werden müssen, um zu gewährleisten, dass die Bahnen nicht seitwärts von den Walzen laufen, welche die Bahnen transportieren bzw. umlenken. Zur Vermeidung dieses Nachteils ist es bekannt, an Stelle von endlosen Bahnen Abschnitte zu verwenden, die mittels seitwärts der Bewegungsbahn angeordneter Zugelemente, beispielsweise Ketten, transportiert werden. Die Abschnitte sind dabei untereinander durch Federelemente zu einer endlosen Schleife verbunden. Durch die Federelemente sind die Abschnitte in Transportrichtung einer Zugspannung unterworfen, was bei den oben liegenden Abschnitten der Trennfolie zum Abheben von den Elementen führt, sobald die Presskraft aufgehoben wird. Dabei wird durch ausgetretenen, zwischen die Trennfolie und die Elementen geratenen Klebstoff eine nach oben gerichtete Kraft auf die Elemente ausgeübt, was insbesondere in der Laminierstation nachteilig ist, weil dort der Klebstoff zwischen den Schichten der Elemente noch nicht ausgehärtet ist.

Der Erfindung liegt die Aufgabe zu Grunde, eine Laminiermaschine vorzuschlagen, welche den geschilderten Nachteil nicht aufweist.

Diese Aufgabe wird gemäss der Erfindung dadurch gelöst, dass die Trennfolie in Abschnitte unterteilt ist, dass jeder Abschnitt ausschliesslich an einem einzigen, quer zum Förderweg orientierten Rand durch Haltemittel gehalten ist, dass die Abschnitte untereinander nicht verbunden sind und dass die Haltemittel durch Antriebsmittel längs des Förderwegs bewegbar sind.

Die Vorteile dieser Lösung bestehen darin, dass sich die Trennfolie der Form der zu laminierenden Elemente gut anpasst, weil sie lose auf den Elementen aufliegt und dass die Trennfolie beim Öffnen der Presse nicht gestreckt wird und somit durch die Trennfolie keine Kraft auf die Elemente ausgeübt wird. Darüber hinaus werden durch die Erfindung die Bauteile und der Arbeitsaufwand eingespart, die bei bekannten Maschinen zum Verbinden der Abschnitte der Trennfolie untereinander vorhanden sind.

Nach einer Ausführungsart der Erfindung weisen die Antriebsmittel umlaufende Zugmittel, insbesondere Ketten auf. Diese Zugmittel können neben der Heizplatte geführt und in einfacher Weise mit den Fördermitteln synchronisiert werden.

Eine weitere Ausführungsart sieht vor, dass die Abschnitte über Umlenkmittel in einem Kreislauf geführt werden, wobei in einem Bereich, in dem die Abschnitte im Wesentlichen vertikal nach unten geführt werden, als Bürsten ausgebildete Führungen mit gegen mindesten eine der beiden Oberflächen der Abschnitte gerichteten Borsten angeordnet sind. Ohne diese Führungen würden die in Förderrichtung gesehen hinteren Abschnitte der Trennfolie, die ja nur am vorderen Ende durch die Haltemittel gehalten sind, in dem genannten Bereich nach unten fallen und das Einführen der Elemente in die Maschine behindern.

Nach einer anderen Ausführungsart weisen die Haltemittel ein C-förmiges Profil auf, in dessen längsseitige Öffnung eine geschlossene Schlaufe des Abschnitts ragt, in der ein Ankerstab aufgenommen ist, dessen Durchmesser grösser ist als die Weite der Öffnung. Diese Haltemittel sind besonders einfach und kostengünstig herzustellen und gewährleisten darüber hinaus eine faltenfreie Befestigung der Abschnitte der Trennfolie.

Bei vielen bekannten Maschinen ist die Membrane in einem Rahmen eingeklemmt, der seinerseits beim Schliessen der Presse mit Hilfe einer umlaufenden Dichtung gegen die Heizplatte bzw. deren Rand abgedichtet wird. Nachteilig ist dabei neben dem Aufwand zum Herstellen des Rahmens und der Dichtung auch der Umstand, dass die Membrane während des Pressvorgangs im Bereich des Rahmens grossen Zugkräften unterworfen ist. Ein Reissen der Membrane während des Pressvorgangs kann zur Zerstörung der zu laminierenden Elemente führen. Die Membrane unterliegt im Betrieb grossen Temperaturschwankungen, was zur Folge hat, dass sie sich mit jedem Arbeitszyklus ausdehnt und wieder zusammenzieht. Wenn die Membrane im Rahmen zu locker gehalten ist, neigt sie zur Faltenbildung und muss nachgespannt werden. Der Vorgang des Nachspannens ist dabei sehr aufwändig, weil der Rahmen demontiert und nach dem Spannen wieder festgeschraubt werden muss.

Nach einer anderen Ausfürungsform, die nicht Teil der Anmeldung ist, wird dieser Nachteil dadurch behoben, dass die Membrane an einer umlaufenden, der Heizplatte zugewandten Randfläche des Oberteils anliegt, dass die Membrane mit dem der Randfläche gegenüberliegenden Bereich ihrer Oberfläche gegen äusseren Überdruck dichtend auf die Oberfläche der Heizplatte oder deren Rand bringbar ist und dass die Membrane mit am Oberteil angeordneten Spannmitteln verbunden ist.

Ein wesentlicher Vorteil dieser Lösung besteht darin, dass die Membrane selbst unter Zwischenlage der Trennfolie und gegebenenfalls des Fördermittels, aber ohne Rahmen mit zusätzlicher Dichtung, auf der Heizplatte abdichtet und mit dieser eine geschlossene Kammer bildet. Während des Pressvorganges wirken somit geringere Zugkräfte auf die Membrane ein, weil sich die Zone, in der die Membrane geklemmt wird, auf der Ebene der Heizplatte befindet und nicht wie beim Stand der Technik über der Heizplatte. Die maximale Zugkraft in der Membrane tritt folglich erst beim Öffnen der Presse auf, so dass ein gegebenenfalls auftretender Riss der Membrane nicht zur Beschädigung der laminierten Elemente führt. Darüber hinaus kann durch die Spannmittel eine vordefinierte Spannung in der Membrane eingestellt und aufrecht erhalten werden, so dass eine Überbeanspruchung und Faltenbildung in der Membrane vermieden wird.

Nach einer Ausführungsart sind die Spannmittel mittels Klemmvorrichtungen mit der Membrane verbunden. Die Klemmvorrichtungen erlauben es, die Membrane zu halten und zu spannen, ohne dass in deren Rand Löcher angebracht werden, die bekanntlich zum Ausreissen neigen.

Nach einer weiteren Ausführungsart besteht jede Klemmvorrichtung aus zwei durch Schrauben gegeneinander spannbare Klemmleisten, die längs angeordnete Ausnehmungen aufweisen und die Membrane zwischen sich einklemmen, wobei in mindestens einer der Ausnehmungen ein die Membrane umlenkendes Profil eingelegt ist. Mit dieser kostengünstigen Massnahmen wird ein besonders sicheres Festhalten ohne Überbeanspruchung der Membrane, etwa durch starkes Quetschen, erreicht.

Eine andere Ausführungsart sieht vor, dass die Spannmittel mindestens eine Kraft erzeugende Vorrichtung enthalten. Anders als eine Kraft speichernde Vorrichtung wie Federn kann eine Kraft erzeugende Vorrichtung wie ein Servomotor auch bei grossen Längenänderungen der Membrane stets eine gleichbleibende Spannung in dieser aufrecht erhalten.

Nach einer weiteren Ausführungsart ist die Kraft erzeugende Vorrichtung eine Kolben-Zylinder-Einheit. Eins solche Einheit ist Platz sparend und besonders einfach zu betreiben.

Schliesslich sieht eine weitere Ausführungsart vor, dass die Kraft erzeugende Vorrichtung über Zugmittel mit der Membrane verbunden ist. Diese Massnahme erlaubt es, die Kraft erzeugende Vorrichtung entsprechend den vorhandenen Platzverhältnissen an der Maschine zu platzieren.

Die Erfindung wird im nachfolgenden anhand der in den Zeichnungen dargestellten Ausführungsbeispiele näher erläutert.

Es zeigen:
- Fig. 1: einen schematischen Längsschnitt durch eine Ausführungsart der erfindungsgemässen Maschine,
- Fig. 2: einen Ausschnitt aus Fig. 1 in einem gegenüber Fig. 1 vergrösserten Massstab,
- Fig. 3: einen Ausschnitt entsprechend Fig. 2 in einem anderen Betriebszustand,
- Fig. 4: eine Ausführungsart der Haltemittel der Trennfolie,
- Fig. 5: eine Ausführungsart von Spannmitteln für die Membrane und
- Fig. 6: einen Ausschnitt einer Maschine nach dem Stand der Technik.

Einführend sei festgehalten, dass in den unterschiedlich beschriebenen Ausführungsformen gleiche Teile mit gleichen Bezugszeichen bzw. gleichen Bauteilbezeichnungen versehen sind, wobei die in der gesamten Beschreibung enthaltenen Offenbarungen sinngemäss auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäss auf die neue Lage zu übertragen.

Die Ausführungsbeispiele zeigen mögliche Ausführungsvarianten der Maschine, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dagestellten und beschriebenen Ausführungsvariante möglich sind, vom Schutzumfang mit umfasst.

Der Ordnung halber sei abschliessend darauf hingewiesen, dass zum besseren Verständnis des Aufbaus der Maschine diese bzw. deren Bestandteile teilweise unmassstäblich und/oder vergrössert und/oder verkleinert dargestellt wurden.

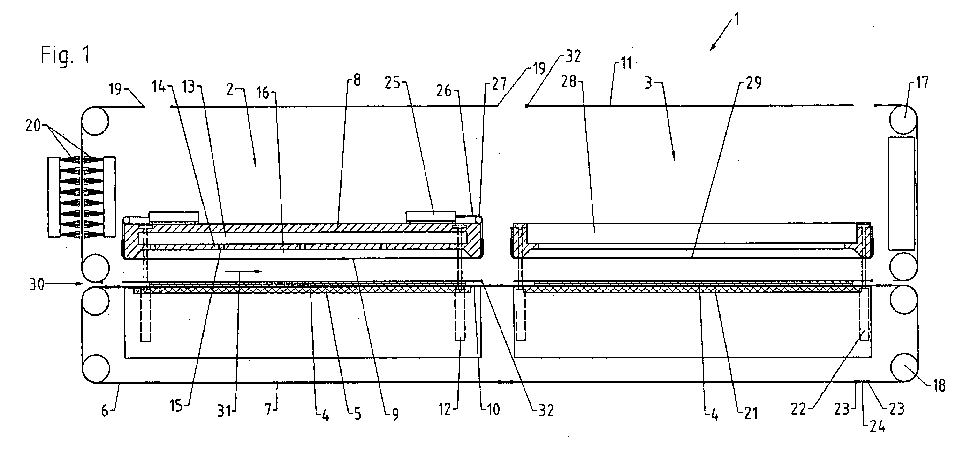

Fig. 1 zeigt eine stark vereinfachte, schematische Schnittansicht durch die Längsachse einer Ausführungsart der erfindungsgemässen Maschine 1. Selbstverständlich ist die Maschine in einem Gestell montiert, das aber der besseren Übersicht halber nicht dargestellt ist. In der Maschine werden plattenförmige Elemente 4, etwa photovoltaische Elemente, durch ein Fördermittel 6 in eine Laminierstation 2 transportiert, wo die Elemente 4 unter Druck und Hitze laminiert werden. Anschliessend werden die Elemente 4 durch die Fördermittel 6 in Richtung des Pfeils 31 in eine Kühlstation 3 transportiert, wo sie eine gewisse Zeit unter Druck verweilen. Die Laminierstation 2 besteht im Wesentlichen aus einer Heizplatte 5 und einem senkrecht zu dieser bewegbaren Oberteil 8. Mit der Bezugszahl 12 sind Hubantriebe bezeichnet, mit denen der Oberteil 8 relativ zur Heizplatte 5 absenkbar und anhebbar ist. Der Oberteil 8 trägt an seiner Unterseite eine Membrane 9, die in abgesenktem Zustand des Oberteils 8 mit der Heizplatte 5 eine abgeschlossene Kammer bildet, die evakuiert werden kann. Bei evakuierter Kammer werden die zu laminierenden Elemente 4 durch die Membrane 9 gegen die Heizplatte 5 gepresst, Lufteinschlüsse, die gegebenenfalls zwischen den Schichten der Elemente 4 noch vorhanden sind, werden entfernt und zwischen den Schichten der Elemente 4 vorhandener Klebstoff wird durch den Druck und/oder die Hitze aktiviert. Zwischen der Membrane 9 und einer Zwischenwand 14 ist im Oberteil 8 eine Kammer 16 gebildet, die bedarfsweise mit Unterdruck oder Überdruck beaufschlagbar ist, um die Membrane 9 entweder anzuheben oder nach unten zu drücken. Ein im Oberteil vorhandener Hohlraum 13 kommuniziert über in der Zwischenwand 14 angeordnete Öffnungen 15 mit der Kammer 16.

Die Kühlstation 3 besteht im Wesentlichen aus einer Kühlplatte 21 und einem gegen diese durch Hubantriebe 22 bewegbaren Oberteil 28, der wie der Oberteil 8 der Laminierstation 2 ebenfalls eine Membrane 29 trägt.

Die Fördermittel 6 sind in diesem Beispiel durch rechteckige Abschnitte 7 eines flachen, flexiblen Materials gebildet, die sowohl an dem in Förderrichtung 31 vorderen Rand als auch an dem in Transportrichtung hinteren Rand durch Haltemittel 23 gehalten sind. Die Haltemittel 23 zweier benachbarter Abschnitte 7 des Fördermittels 6 sind durch Federn 24 miteinander verbunden, so dass das Fördermittel 6 eine endlose, über Umlenkwalzen 18 geführte Schleife bildet, deren rücklaufendes Trum unter der Kühlplatte 21 und der Heizplatte 5 hindurch führt.

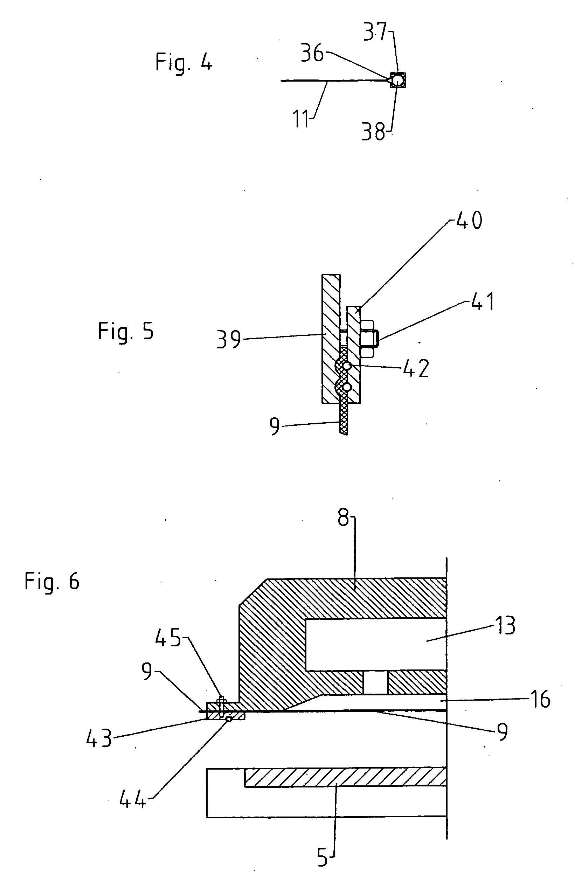

Auf jedes Element 4 bzw. eine Gruppe von Elementen 4 wird an der Einlaufseite 30 in die Maschine 1 eine Trennfolie 10 ohne Spannung aufgelegt, einerseits um die Membrane 9 vor Verschmutzungen, beispielsweise durch aus den Elementen 4 austretenden Klebstoff, zu schützen, andererseits um insbesondere beim Öffnen der Laminierstation 2 jegliche Kräfte zu vermeiden, die zu einer Relativbewegung zwischen den einzelnen Schichten der Elemente 4 führen könnten. Jeder Abschnitt der Trennfolie 10 ist an seinem in Förderrichtung 31 vorab laufenden, rechtwinklig zur Förderrichtung ausgerichteten Rand durch Haltemittel 32 gehalten, die im hier beschriebenen Ausführungsbeispiel als Profil ausgebildet sind, das auf beiden Seiten des Förderwegs durch einen Zugmittelantrieb, beispielsweise einen nicht dargestellten Kettenförderer, entlang des Förderwegs bewegt wird. Die Haltemittel 32 werden später an Hand der Fig. 4 noch genauer beschrieben. Die übrigen Ränder der Abschnitte 11 der Trennfolie 10 sind frei, so dass jeder Abschnitt beim Transport durch die Maschine 1 lose auf den Elementen 4 aufliegt. Besonders vorteilhaft ist dies auf dem Wegabschnitt von der Laminierstation 2 zur Kühlstation 3, weil dort die Elemente 4 noch heiss sind und daher der die einzelnen Schichten verbindende Kleber noch nicht ausgehärtet und daher klebrig ist und zum Fliessen neigt. Würde die Trennfolie auf diesem Wegabschnitt gespannt, wie dies bei den eingangs geschilderten Maschinen des Standes der Technik der Fall ist, könnte dies zu einer unerwünschten Relativbewegung zwischen den Schichten führen. Zudem hat natürlich die hier geschilderte Konstruktion gegenüber dem erwähnten Stand der Technik den Vorteil, dass bei jedem Abschnitt der Trennfolie 10 auf einer Seite auf Haltemittel verzichtet wird und die die Abschnitte verbindenden Federn ganz eingespart werden. Der die Haltemittel 32 bewegende Zugmittelantrieb läuft in einem Kreislauf und die Abschnitte 11 der Trennfolie 10 werden über Umlenkwalzen 17 geführt, wobei sie oberhalb der Oberteile 28 bzw. 8 der Kühlstation 3 und der Laminierstation 2 wieder zur Einlaufseite 30 der Maschine 1, links in Fig. 1, zurück transportiert werden. Oberhalb der Maschine können Führungen vorgesehen sein (nicht dargestellt), über welche das freie Ende 19 jedes Abschnitts der Trennfolie 10 geschleppt wird. Um zu verhindern, dass die Abschnitte 11 im Bereich, in dem sie im Wesentlichen in einer vertikalen Richtung zur Einlaufseite 30 zurück geführt werden, einfach herunterfallen, sind dort Führungen in der Gestalt von in Förderrichtung 31 ausgerichteten, länglichen Bürsten 20 angeordnet. Auf beiden Flächen der Trennfolie 10 angeordnete starre Führungen würden sich schlecht eignen, denn sie müssten voneinander einen solchen Abstand aufweisen, dass die Haltemittel 32 dazwischen hindurch passen würden. Je nach Steifigkeit der Trennfolie 10 könnte diese sich in diesem Abstand zwischen den Führungen hin und her falten und dadurch in unerwünschter Weise geknickt werden. Dagegen können die Bürsten auf beiden Seiten der Trennfolie 10 bis zu deren Oberfläche reichen, denn ihre Borsten geben nach, so dass die Haltemittel 32 problemlos passieren können.

Auf dem Wegabschnitt, auf dem die Fördermittel 6 und die Trennfolie 10 nach dem Verlassen der Kühlstation 3 zur Einlaufseite 30 der Maschine 1 zurück geführt werden, können nicht dargestellte Reinigungsvorrichtungen angeordnet sein, mit denen die Fördermittel 6 und die Trennfolie 10 von Verunreinigungen wie Klebemittelresten befreit werden. Wie man in der Fig. 1 deutlich sieht, müssen die Fördermittel 6 und die Trennfolie 10 nicht gleich lang sein. Beispielsweise kann die Trennfolie 10 problemlos einen oder mehrere Abschnitte mehr aufweisen als das Transportmittel 6.

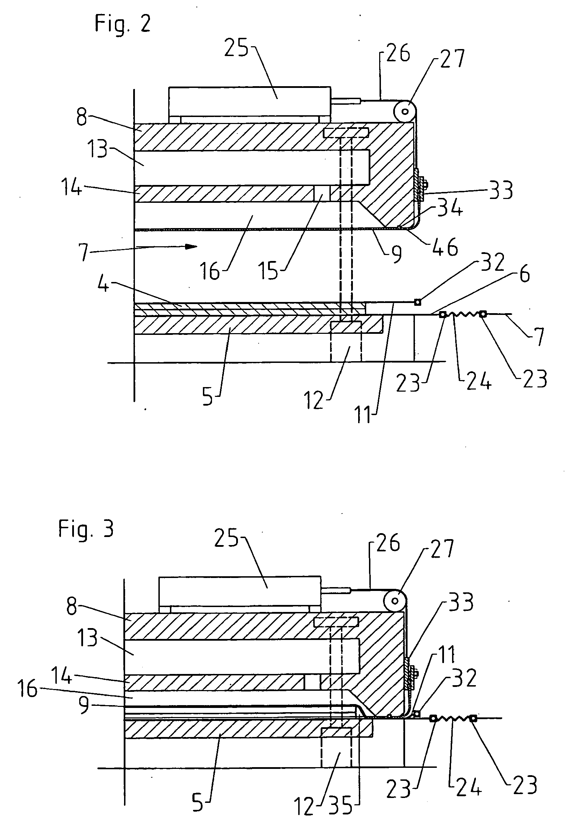

Fig. 2 zeigt in einem vergrösserten Ausschnitt aus Fig. 1 einen Teil der Laminierstation 2 in der geöffneten Position, das heisst mit angehobenem Oberteil 8. Das zu laminierende Element 4 ist unter Zwischenlage eines Abschnitts 7 der Fördermittel auf der Heizplatte 5 positioniert und mit einem Abschnitt 11 der Trennfolie abgedeckt. Wie man in der Figur sieht, sind die Haltemittel 32 des Abschnitts 11, die Haltemittel 23 des Abschnitts 7 und die Federn 24, welche die Abschnitte 23 miteinander verbinden, so positioniert, dass sie beim Herunterfahren des Oberteils 8 durch diesen nicht eingeklemmt werden. Zudem sind die Haltemittel 32 des Abschnitts 11 und die die Haltemittel 23 des Abschnitts 7 in Förderrichtung gegeneinander versetzt, so dass sie nicht aufeinander liegen. Die Membrane 9 ist um die Ränder 46 des Oberteils 8 herum gerührt, wobei zwischen der Membrane 9 und dem Oberteil 8 eine Dichtung 34 eingelegt sein kann. Die Ränder der Membrane 9 sind mittels einer Klemmvorrichtung 33 gefasst, die mit einem Spannantrieb 25 zusammenwirkt. Der Spannantrieb 25 ist vorteilhaft als hydraulisch oder pneumatisch betriebene Kolben-Zylinder-Einheit ausgebildet. Aus Platzgründen ist es vorteilhaft, wenn der Spannantrieb 25 oben auf dem Oberteil 8 angeordnet ist und seine Kraft über Zugmittel 26, beispielsweise über Umlenkrollen 27 gerührte Bowdenzüge, auf die Klemmvorrichtungen 33 überträgt. Der Spannantrieb 25 erlaubt es, in der Membrane 9 eine vordefinierte Spannung aufrecht zu erhalten. Er kann zu diesem Zweck mit der Steuervorrichtung der Maschine verbunden sein.

In Fig. 3 ist die Laminierstation geschlossen, das heisst, der Oberteil 8 wurde mit Hilfe des Hubantriebs 12 abgesenkt, bis der umlaufende untere Rand 46 die Dichtung 34, die Membrane 9, den Abschnitt 11 der Trennfolie und den Abschnitt 7 des Fördermittels 6 dichtend gegen die Heizplatte 5 bzw. deren auf gleicher Höhe liegenden Rand presst. Dadurch ist zwischen der Heizplatte 5 und der Membrane 9 eine geschlossene Kammer 35 gebildet, in der sich die zu laminierenden Elemente 4 befinden. Diese Kammer 35 wird nun evakuiert, so dass die Elemente 4 entgast werden und sich die Membrane 9 eng auf die Elemente 4 und den lose darauf liegenden Abschnitt 11 der Trennfolie 10 legt.

In Fig. 4 ist ein Ausführungsbeispiel der Haltemittel 32 des Abschnitts 11 der Trennfolie 10 in einem gegenüber den vorangehenden Figuren vergrösserten Massstab dargestellt. Der Abschnitt 11 der Trennfolie 10 ist an einem einzigen Rand mit einer Schlaufe 36 versehen, die beispielsweise durch Umlegen und Schweissen, Kleben oder Nähen gebildet wurde. Diese Schlaufe 36 wird in der längsseitigen Öffnung eines C-förmigen Profils 37 durch einen Ankerstab 38 gehalten, dessen Durchmesser grösser ist als die Weite genannten Öffnung. Vorteilhaft ist der Ankerstab rohrförmig.

Fig. 5 zeigt die Klemmvorrichtung für die Membrane 9 in einem gegenüber den vorangehenden Figuren 2 und 3 noch einmal vergrösserten Massstab. Die Membrane 9 ist zwischen zwei Klemmleisten 39 und 40 eingeklemmt, wobei die Klemmleiste 39 in nicht dargestellter Weise mit dem Zugmittel 26 verbunden ist. Um den Halt der Membrane 9 in der Klemmvorrichtung 33 zu verbessern, ist zudem die Klemmleiste 40 mit längs verlaufenden Ausnehmungen versehen, in die Einlegeprofile 42 passen. Die Klemmleiste 39 weist im Bereich der Einlegeprofile ebenfalls Ausnehmungen auf, so dass die Membrane 9 beim Klemmen mehrfach umgebogen wird, wodurch sich der Reibwiderstand gegen Ausreissen wesentlich erhöht. Schrauben 41 dienen zum Zusammenspannen der Klemmleisten 39 und 40.

Fig. 6 zeigt schematisch einen Ausschnitt einer Laminierpresse nach dem Stand der Technik. Die Membrane 9 ist befestigt, indem sie mit Hilfe eines Spannrahmens 43 gegen den Oberteil 8 befestigt ist. Der Spannrahmen 43 ist dabei mit Schrauben 45 welche durch in der Membrane 9 angebrachte Löcher geführt sind, an einem Flansch des Oberteils festgeschraubt. Zur Abdichtung des Rahmens 43 an der Heizplatte 5 bzw. deren Rand ist eine im Spannrahmen 43 angeordnete Dichtung 44 erforderlich.

### Bezugszeichenaufstellung

- 1: Maschine
- 2: Laminierstation
- 3: Kühlstation
- 4: plattförmiges Element
- 5: Heizplatte

- 6: Fördermittel
- 7: Abschnitt von 6
- 8: Oberteil von 2
- 9: Membrane
- 10: Trennfolie

- 11: Abschnitt von 10
- 12: Hubantrieb für 8
- 13: Hohlraum in 8
- 14: Zwischenwand von 8
- 15: Öffnung in 14

- 16: Kammer
- 17: Umlenkwalze für 10
- 18: Umlenkwalze für 6
- 19: freies Ende von 10
- 20: Bürsten

- 21: Kühlplatte
- 22: Hubantrieb für 28
- 23: Haltemittel für 6
- 24: Feder
- 25: Spannantrieb

- 26: Zugmittel
- 27: Umlenkrolle
- 28: Oberteil von 3
- 29: Membrane
- 30: Einlaufseite

- 31: Förderrichtung
- 32: Haltemittel für 11
- 33: Klemmvorrichtung
- 34: Dichtung
- 35: Kammer

- 36: Schlaufe
- 37: C-Profil
- 38: Stab
- 39: Klemmleiste
- 40: Klemmleiste
- 41: Schraube

- 42: Einlegeprofil
- 43: Spannrahmen
- 44: Dichtung
- 45: Schraube

- 46: Randfläche

## Patentansprüche

1. Maschine (1) zur Herstellung von plattenförmigen Elementen (4) aus Verbundmaterial, mit einer Heizplatte (5), Fördermitteln (6) zum Transportieren der Elemente (4) längs eines über die Heizplatte (5) führenden Förderwegs, einem senkrecht zur Heizplatte (5) bewegbaren Oberteil (8), einer am Oberteil (8) angeordneten Membrane (9) und einer zwischen der Membrane (9) und der Heizplatte (5) angeordneten, synchron mit den Fördermitteln bewegbaren Trennfolie (10), wobei die Trennfolie (10) in Abschnitte (11) unterteilt ist, wobei jeder Abschnitt (11) ausschliesslich an einem einzigen, quer zum Förderweg orientierten Rand durch Haltemittel (32) gehalten ist, wobei die Abschnitte (11) untereinander nicht verbunden sind und wobei die Haltemittel (32) durch Antriebsmittel längs des Förderwegs bewegbar sind.

2. Maschine nach Anspruch 1, **dadurch gekennzeichnet, dass** die Antriebsmittel umlaufende Zugmittel, insbesondere Ketten aufweisen.

3. Maschine nach einem der vorangehenden Ansprüche, **dadurch gekennzeichnet, dass** die Abschnitte (11) über Umlenkmittel (17) in einem Kreislauf geführt werden, wobei in einem Bereich, in dem die Abschnitte (11) im Wesentlichen vertikal nach unten geführt werden, als Bürsten (20) ausgebildete Führungen mit gegen mindesten eine der beiden Oberflächen der Abschnitte (11) gerichteten Borsten angeordnet sind.

4. Maschine nach einem der vorangehenden Anspruch, **dadurch gekennzeichnet, dass** die Haltemittel (32) ein C-förmiges Profil (37) aufweisen, in dessen längsseitige Öffnung eine geschlossene Schlaufe (36) des Abschnitts (11) ragt, in der ein Ankerstab (38) aufgenommen ist, dessen Durchmesser grösser ist als die Weite der Öffnung.

## Claims

1. Machine (1) for producing board-shaped elements (4) from composite material, with a heated plate (5), conveyor means (6) for transporting the elements (4) along a conveyor path leading across the heated plate (5), a top part (8) which can be moved vertically with respect to the heated plate (5), a membrane (9) disposed on the top part (8) and a separating film (10) disposed between the membrane (9) and heated plate (6) which can be moved synchronously with the conveyor means, and the separating film (10) is divided into sections (11) and each section (11) is held exclusively at a single edge oriented transversely to the conveyor path by retaining means (32), and the sections (11) are not connected to one another and the retaining means (32) can be moved along the conveyor path by drive means.

2. Machine as claimed in claim 1, **characterised in that** the drive means comprise circulating traction means, in particular chains.

3. Machine as claimed in one of the preceding claims, **characterised in that** the sections (11) are guided in a circuit by pulley means (17), and guides in the form of brushes (20) with bristles directed towards at least one of the two surfaces of the sections (11) are disposed in a region in which the sections (11) are guided essentially vertically downwards.

4. Machine as claimed in one of the preceding claims, **characterised in that** the retaining means (32) comprise a C-shaped section (37) into the lengthways orifice of which a closed loop (36) of the section (11) extends, in which an anchoring bar (38) is accommodated, the diameter of which is bigger than the width of the orifice.

## Revendications

1. Machine (1) pour la fabrication d'éléments en forme de plaque (4) en matériau composite, avec une plaque chauffante (5), des moyens de convoyage (6) pour le transport des éléments (4) le long d'un chemin de transport menant sur la plaque chauffante (5), une partie supérieure (8) déplaçable perpendiculairement à la plaque chauffante (5), une membrane (9) disposée à la partie supérieure (8) et une feuille de séparation (10) disposée entre la membrane (9) et la plaque chauffante (5), déplaçable d'une manière synchronisée avec les moyens de convoyage, où la feuille de séparation (10) est séparée en sections (11), où chaque section (11) est retenue à un seul bord orienté transversalement au chemin de convoyage par des moyens de retenue (32), où les sections (11) ne sont pas reliées entre elles et où les moyens de retenue (32) sont déplaçables par des moyens d'entraînement le long du chemin de transport.

2. Machine selon la revendication 1, **caractérisée en ce que** les moyens d'entraînement présentent des moyens de traction s'étendant tout autour, en particulier des chaînes.

3. Machine selon l'une des revendications précédentes, **caractérisée en ce que** les sections (11) sont guidées par des moyens de renvoi (17) en un circuit, où dans une zone, dans laquelle les sections (11) sont guidées sensiblement verticalement vers le bas, sont disposés des guidages réalisés sous forme de brosses (20) avec des brosses dirigées contre au moins une des deux surfaces des sections (11).

4. Machine selon l'une des revendications précédentes, **caractérisée en ce que** les moyens de retenue (32) présentent un profil en forme de C (37), dans l'ouverture côté longueur de celui-ci fait saillie une boucle fermée (36) de la section (11) dans laquelle est reçue une barre d'ancrage (38) dont le diamètre est plus grand que la largeur de l'ouverture.
